(19) **Europäisches Patentamt / European Patent Office / Office européen des brevets**

(11) **EP 1 657 829 B1**

(12) **EUROPEAN PATENT SPECIFICATION**

(45) Date of publication and mention
of the grant of the patent:
**05.05.2010 Bulletin 2010/18**

(51) Int Cl.:
***H04B 7/06*** (2006.01)

(21) Application number: **05024941.6**

(22) Date of filing: **15.11.2005**

(54) **Method and apparatus for transmitting/receiving data in a multiple-input multiple-output communication system**

Verfahren und Vorrichtung zum Senden/Empfangen von Daten in einem MIMO Kommunikationssystem

Procédé et dispositif pour transmission et réception de données dans un système de communication MIMO

(84) Designated Contracting States:
**DE FI FR GB SE**

(30) Priority: **15.11.2004 US 628033 P**
        **14.11.2005 KR 2005108705**

(43) Date of publication of application:
**17.05.2006 Bulletin 2006/20**

(73) Proprietors:
• **Samsung Electronics Co., Ltd.**
  **Suwon-si, Gyeonggi-do (KR)**
• **Seoul National University Industry Foundation**
  **Seoul (KR)**

(72) Inventors:
• **Kim, Sung-Jin**
  **Samsung Electronics Co., Ltd.**
  **Suwon-si**
  **Gyeonggi-do (KR)**
• **Kim, Ho-Jin**
  **Samsung Electronics Co., Ltd.**
  **Suwon-si**
  **Gyeonggi-do (KR)**
• **Kim, Ki-Ho**
  **Samsung Electronics Co., Ltd.**
  **Suwon-si**
  **Gyeonggi-do (KR)**
• **Park, Hyoung-Woon**
  **Samsung Electronics Co., Ltd.**
  **Suwon-si**
  **Gyeonggi-do (KR)**

• **Chung, Jae-Hak**
  **Samsung Electronics Co., Ltd.**
  **Suwon-si**
  **Gyeonggi-do (KR)**
• **Chae, Chan-Byoung**
  **Samsung Electronics Co., Ltd.**
  **Suwon-si**
  **Gyeonggi-do (KR)**
• **Roh, Won-Il**
  **Samsung Electronics Co., Ltd.**
  **Suwon-si**
  **Gyeonggi-do (KR)**
• **Lee, Kwang-Bok**
  **Seoul Univ. Industry Found.**
  **Gwanak-gu**
  **Seoul (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**US-A1- 2003 060 173      US-A1- 2004 209 579**

• **JUNE CHUL ROH ET AL: "An efficient feedback method for MIMO systems with slowly time-varying channels" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, 21 March 2004 (2004-03-21), pages 760-764, XP010708572 ISBN: 0-7803-8344-3**

**EP 1 657 829 B1**

**Description**

The present invention relates generally to a data transmission/reception method and apparatus for a Multiple-Input Multiple-Output (MIMO) communication system, and in particular, to a method and apparatus for transmitting/receiving data using Singular Value Decomposition (SVD) and QR decomposition in a MIMO communication system.

A MIMO communication system uses one of the technologies for providing high channel performance through wireless fading channels. The main goal in the MIMO communication system is channel performance, and in particular, providing optimal-quality channels to users and increasing data throughput using multi-user diversity is becoming increasingly important.

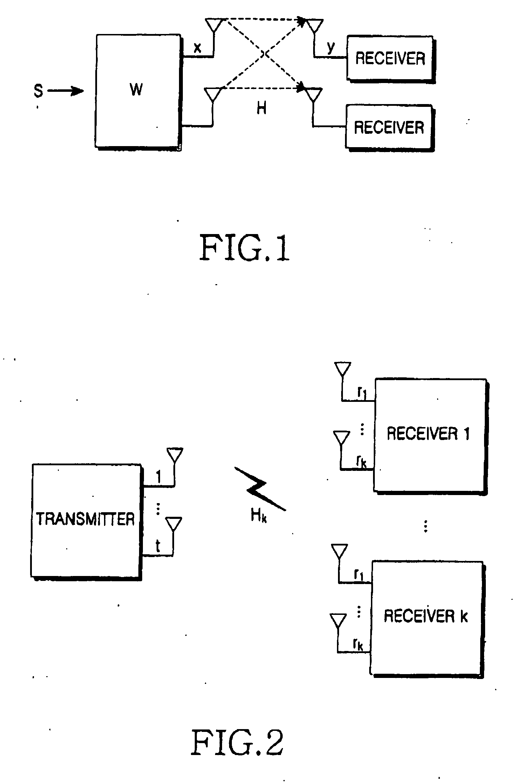

FIG. 1 is a block diagram illustrating a conventional multiuser Multiple-Input Single-Output (MISO) system. A method for transmitting data in the multiuser MISO system in which, as illustrated, a transmitter includes multiple antennas and a receiver includes a single antenna will now be described.

In FIG 1, a signal y received at the receiver equals **Hx+n.** Herein, **H** denotes a channel matrix, x denotes a signal vector obtained by performing unitary transformation on an input signal s and outputting the resulting signal through the antennas at the transmitter, and equals **Ws,** and n denotes a noise vector. **W** denotes a unitary transformation matrix of the transmitter and can be represented by $Q^H$, and the transmitter adopts beamforming that uses the unitary transformation matrix **W.** Herein, **Q** denotes an orthogonal matrix, and $QQ^H=I$, where a superscript H denotes conjugate transposition.

Therefore, y becomes **HWs+n,** and if **H** is subject to QR decomposition, y becomes **$RQQ^Hs+n=Rs+n$,** thus reducing calculations. **R** denotes a lower triangular matrix. That is, if a channel matrix is subject to QR decomposition, y is transformed into a formula including lower triangular matrices, thus reducing its calculations.

However, unlike the receivers of FIG. 1, if a receiver has multiple antennas, the receiver must use information on all channels for the multiple antennas, thus increasing the amount of data being fed back from the receiver to the transmitter and also increasing calculations at the transmitter. In this case, the receiver must perform repeated calculations through several steps in order to decompose a channel matrix H into lower triangular matrices to provide the optimal channel performance.

US 2003/060173 A1 discloses an apparatus and method for transmitting and receiving data using an antenna array in a mobile communication system. A Node B measures a transmission status of each transmission antenna, classifies transmission data according to a priority and transmits high priority data to an UE through a transmission antenna at a relatively good transmission status and low priority data through a transmission antenna at a relatively poor transmission status. A channel estimator/transmission antenna assigner receives feedback information H about the transmission statuses of transmission antennas in a transmission antenna array from each UE. A feedback information receiver feeds the transmission status information H to a controller. The controller controls the transmission antenna assigner to appropriately assign data groups to the transmission antennas according to the transmission status information H. The receiver corresponds to the transmitter and has a channel estimator/data classifier and estimates the transmission statuses of downlink channels corresponding to the reception antennas in a reception antenna array. A feedback information generates feedback information based on the transmission status information H received from the channel estimator/data classifier. A feedback channel information transmitter converts the feedback information in a suitable format and transmits it to the base station. The feedback information receiver extracts feedback information indicating the transmission status of each transmission antenna using the input signal and transmission status information received from the channel estimator/transmission antenna assigner. By the above operation, a MIMO system is changed to a plurality of equivalent SISO (single input single output) systems through linear conversion.

US 2004/209579 A1 discloses a system and method for transmit weight computation for vector beamforming radio communication. A first communication device and a second communication device using RF communication techniques receive signals at a plurality of antennas representing a plurality of modes simultaneously transmitted by the other communication device, wherein each mode is a signal stream. A transmit matrix is computed from signals received at the plurality of antennas. The transmit matrix distributes a plurality of modes among a plurality of antenna paths each associated with a corresponding one of the plurality of antennas of the first communication device and is applied to the plurality of modes to be simultaneously transmitted from the plurality of antennas of one communication device to the other communication device. For providing an optimal solution, it is required that the transmitter has knowledge of channel state information on QR iterations which is a numerical technique used to find the eigenvalues and the eigenvectors of a Hermitian matrix. Each time a device receives signals from the other device, it updates its transmit matrix.

The present invention at least aims to substantially overcome the aforementioned disadvantages of the prior art.

The object of the present invention is to provide an improved data transmission/reception method and apparatus for modeling a multiuser MIMO system on a multiuser MISO system by decomposing a single-user MIMO channel in the multiuser MIMO system.

This object is solved by the subject matter of the independent claims.

Preferred embodiments are defined by the subject matter of the dependent claims.

The present invention will become more apparent from the following detailed description when taken in conjunction with the accompanying drawings in which:

FIG. 1 is a block diagram illustrating a conventional multiuser Multiple-Input Single-Output (MISO) system;
FIG. 2 is a block diagram illustrating a multiuser MIMO communication system to which a preferred embodiment of the present invention is applied; and
FIGs. 3 and 4 are graphs illustrating comparative simulation results between the present invention and the prior art.

A preferred embodiment of the present invention will now be described in detail with reference to the annexed drawings. In the following description, a detailed description of known functions and configurations incorporated herein has been omitted for clarity and conciseness.

FIG. 2 is a block diagram illustrating a multiuser MIMO communication system to which a preferred embodiment of the present invention is applied.

In the MIMO communication system illustrated in FIG. 2, a transmitter having a plurality, t, of transmission antennas communicates with receivers each having a plurality, $r_k$, of reception antennas using K wireless downlinks.

Therefore, the total number, r, of reception antennas is $\sum_{k=1}^{K} r_k$.

A channel output $y_k$ of a receiver k is modeled on $\mathbf{H_k x + z_k}$, where x denotes a $t \times 1$ input signal vector transmitted from a transmission antenna to the receiver, and a $t \times 1$ vector $\mathbf{Z_k}$ denotes a random noise applied to the receiver k. A channel $\mathbf{H_k}$ is an $r_k \times t$ complex matrix.

In the system of FIG. 2, the receiver decomposes a MIMO channel $\mathbf{H_k}$ for a single user into a multiuser MISO channel $\mathbf{F_k}$ through transformation and feeds back the resulting value to the transmitter. This can be expressed as Equation (1).

$$\mathbf{F_k = U_k^H H_k} \qquad \dots \dots \dots (1)$$

where $\mathbf{U_k^H}$ denotes a matrix for transforming the MIMO channel $\mathbf{H_k}$ for a single user into the multiuser MISO channel $\mathbf{F_k}$. That is, $\mathbf{F_k}$ is one effective channel matrix selected from channels $\mathbf{H_k}$ for the $r_k$ reception antennas.

If the $\mathbf{H_k}$ is subject to SVD decomposition at the receiver, it can be expressed as $\mathbf{H_k = U_k D_k V_k^H}$, where $\mathbf{D_k}$ denotes a diagonal matrix indicating a size and $\mathbf{V_k^H}$ denotes a matrix indicating a direction.

Therefore, $\mathbf{F_k}$ can be expressed as Equation (2).

$$\mathbf{F_k = U_k^H U_k D_k V_k^H = D_k V_k^H} \qquad \dots \dots \dots (2)$$

Next, the transmitter performs beamforming by applying QR decomposition to a set $F=[F_1^T,..., F_k^T]^T$ for each receiver for the effective channel matrix $\mathbf{F_k}$ of Equation (2). That is, $\mathbf{F}$ indicates that an effective broadcasting channel and can be treated as a multiuser MISO channel. In other words, the transmitter allocates antennas to individual channels in the order of a channel having the greatest $\mathbf{D_k}$ and determines beams of the antennas accordingly.

The effective broadcasting channel $\mathbf{F}$, if it undergoes QR decomposition, is expressed as $\mathbf{F=RW,}$ where $\mathbf{R}$ denotes an $r \times t$ lower triangular matrix and $\mathbf{W}$ denotes a $t \times t$ matrix having orthogonal rows.

Assuming that a unitary matrix used for beamforming is denoted by $W^H$ and a transmission signal input to the transmitter is denoted by s, a channel output y of the receiver can be expressed as Equation (3).

$$\begin{aligned} \mathbf{y} &= \mathbf{Fx+z} \\ &= \mathbf{RWW^H s+z} \qquad \dots \dots \dots (3) \\ &= \mathbf{Rs+z} \end{aligned}$$

where $y=[y_1^T,..., y_k^T]^T$, and $z=[z_1^T,..., \mathbf{Z_k}^T]^T$. That is, the present invention is characterized by transmitting/receiving data by modeling a multiuser MIMO system on a multiuser MISO system by decomposing a single-user MIMO channel $\mathbf{H_k}$

into $F_k$ in the multiuser MIMO system.

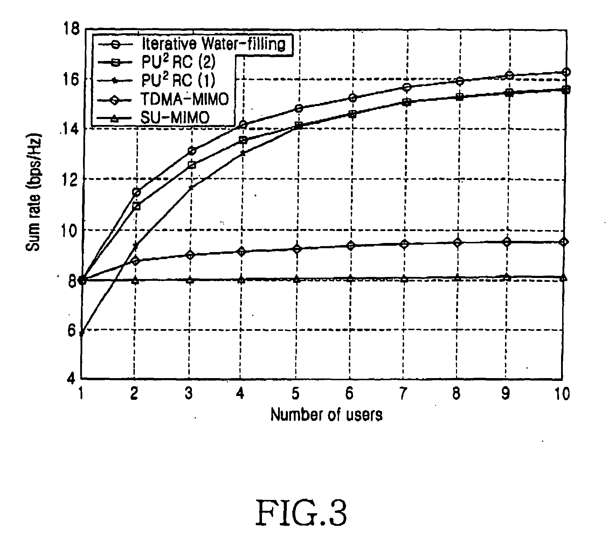

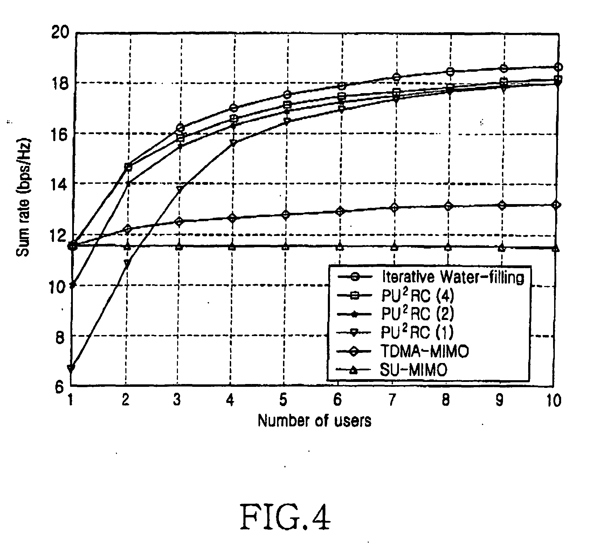

FIGs. 3 and 4 are graphs illustrating a comparison between the present invention and the prior art in terms of sum rate performance for downlink channels, determined depending on the number of users, i.e., the number of receivers.

Herein, a signal-to-noise ratio (SNR) is assumed to be 10dB. In addition, SU-MIMO indicates a single-user rate acquired by an SVD-based optimal water filtering solution taking point-to-point link communication into consideration, and is equal to TDMA-MIMO having one user. The TDMA-MIMO shows a lower gain for the increase in number of users. PU$^2$RC (Per-user Unitary Feedback/Beamforming and Rate Control) corresponds to an embodiment of the present invention, and a parenthesized number indicates the number of effective channel vectors. As illustrated, for the single user, PU$^2$RC is equal in performance to SU-MIMO and TDMA-MIMO. However, when the number of users is large enough, PU$^2$RC is similar in performance to iterative water filtering that realizes the optimal performance.

It is assumed in FIG 3 that the system has four transmission antennas and two reception antennas, and it is assumed in FIG. 4 that the system has four transmission antennas and four reception antennas.

In FIG 3, therefore, the number of effective channel vectors is two, and feedback performance for one effective channel vector closely approximates feedback performance for two effective channel vectors when the number of users is five.

In FIG. 4, therefore, three different kinds of feedback information can be used. That is, one-effective channel vector-based feedback information, two-effective channel vector-based feedback information and four-effective channel vector-based feedback information can be used. The performance based on the number of effective channel vectors will be described below. The number of users should be increased in order for performance for one or two effective channel vectors to be equal to performance for four effective channel vectors. That is, when the number users is large enough, the present invention can acquire the same performance even though it decreases the number of effective channel vectors, i.e., decreases the amount of information being fed back from the transmitter to the receiver.

As can be understood from the foregoing description, the present invention models a multiuser MIMO channel on a multiuser MISO channel, thereby reducing calculations at the transmitter and the receiver, and also reducing data throughput.

In addition, the transmitter performs QR decomposition and antenna-setting using channel information which is fed back from the receiver through SVD, thus improvingthe capacity gain of multichannel selection diversity.

While the invention has been shown and described with reference to a certain preferred embodiment thereof, it will be understood by those skilled in the art that various changes in form and details may be made therein without departing from the scope of the invention as defined by the appended claims.

**Claims**

1. A method for transmitting and receiving in a transmission and a reception apparatus, the transmission apparatus having a plurality of transmission antennas for communicating with the reception apparatus having a plurality of reception antennas in a multiple-input multiple-output, MIMO, communication system, the method comprising:

   receiving from the reception apparatus SVD, singular value decomposition, -decomposed channel information for a channel established from the transmission apparatus to the reception apparatus;
   performing QR decomposition on the received SVD-decomposed channel information;
   setting multiple transmission antennas to be allocated to the channel according to a result of the QR decomposition, thereby performing beamforming; and
   transmitting data using the set multiple transmission antennas;

   wherein in the reception apparatus the SVD-decomposed channel information is derived from an effective multiple-input single-output channel matrix $F_k$ which is obtained by transforming a multiple-input multiple-output channel matrix $H_k$ by singular value decomposition.

2. The method of claim 1, wherein the $F_k$ is expressed by $F_k = U_k^H H_k$ , wherein $U_k^H$ denotes a matrix for transforming the MIMO channel $H_k$ for a single user into the multiuser MISO channel $F_k$.

3. The method of claim 1, wherein deriving the SVD-decomposed channel information comprises:

   performing, by the reception apparatus, SVD decomposition on the channel matrix $H_k$ for multiple reception antennas;
   decomposing, by the reception apparatus, the channel matrix $H_k$ into the effective channel matrix $F_k$ for a single

reception antenna using a matrix for transforming the channel matrix $H_k$ into the effective channel matrix $F_k$; and feeding back, by the reception apparatus, the effective channel matrix $F_k$ to the transmission apparatus.

4. The method of claim 3, further comprising receiving, by the transmission apparatus, the effective channel matrix $F_k$, and performing QR decomposition on the received effective channel matrix $F_k$.

5. A method for transmitting and receiving data in a reception apparatus having a plurality of reception antennas for communicating with a transmission apparatus having a plurality of transmission antennas in a multiple-input multiple-output, MIMO communication system, the method comprising:

transforming a multiple-input multiple-output channel matrix $H_k$ into an effective multiple-input single-output channel matrix $F_k$ by performing an singular value decomposition, SVD, on the channel matrix $H_k$, and feeding back information of the effective channel matrix $F_k$ to the transmission apparatus.

6. The method of claim 5, wherein performing said SVD-decomposition on the channel matrix $H_k$ comprises:

performing an SVD decomposition on the channel matrix $H_k$ for multiple reception antennas; and decomposing the channel matrix $H_k$ into the effective channel matrix $F_k$ for
a single antenna using a matrix for transforming the channel matrix $H_k$ into the effective channel matrix $F_k$.

7. A transmission apparatus having a plurality of transmission antennas and a reception apparatus having a plurality of reception antennas for a multiple-input multiple-output, MIMO, communication system,
said transmission apparatus being adapted for:

receiving from the reception apparatus SVD, singular value decomposition, -decomposed channel information for a channel established from the transmission apparatus to the reception apparatus;
performing QR decomposition on the received SVD-decomposed channel information;
setting multiple transmission antennas to be allocated to the channel according to a result of the QR decomposition, thereby performing beamforming; and
transmitting data using the set multiple transmission antennas,
said reception apparatus being adapted for deriving the SVD-decomposed channel information from an effective multiple-input single-output channel matrix $F_k$ which is obtained by transforming a multiple-input multiple-output channel matrix $H_k$ by singular value decomposition.

8. The apparatuses of claim 7 adapted to operate the method according to one of claims 1 to 4.

9. A reception apparatus having a plurality of reception antennas for communicating with a transmission apparatus having a plurality of transmission antennas for a multiple-input multiple-output, MIMO, communication system, said reception apparatus being adapted for:

transforming a multiple-input multiple-output channel matrix $H_k$ into an effective multiple-input single-output channel matrix $F_k$ by performing an singular value decomposition, SVD, on the channel matrix $H_k$, and feeding back information of the effective channel matrix $F_k$ to the transmission apparatus.

10. The reception apparatus of claim 9, wherein the reception apparatus is adapted for:

performing said SVD-decomposition on the channel matrix $H_k$ for multiple reception antennas; and decomposing the channel matrix $H_k$ into the effective channel matrix $F_k$ for a single antenna using a matrix for transforming the channel matrix $H_k$ into the effective channel matrix $F_k$.

**Patentansprüche**

1. Verfahren zum Senden und Empfangen in einer Sende- und einer Empfangsvorrichtung, wobei die Sendevorrichtung eine Vielzahl von Sendeantennen aufweist, um mit der Empfangsvorrichtung, die eine Vielzahl von Empfangsantennen aufweist, in einem MIMO-Kommunikationssystem (multiple-input multiple-output communication system) zu kommunizieren, und wobei das Verfahren umfasst:

Empfangen in Singulärwertzerlegung zerlegter Kanalinformationen für einen von der Sendevorrichtung zu der Empfangsvorrichtung eingerichteten Kanal von der Empfangsvorrichtung;
Durchführen von QR-Zerlegung der empfangenen in Singulärwertzerlegung zerlegten Kanalinformationen;
Festlegen mehrerer dem Kanal zuzuordnender Sendeantennen entsprechend einem Ergebnis der QR-Zerlegung, um so Strahlformen durchzuführen; und
Senden von Daten unter Verwendung der festgelegten mehreren Sendeantennen;

wobei in der Empfangsvorrichtung die in Singulärwertzerlegung zerlegten Kanalinformationen aus einer effektiven MISO-Kanalmatrix (multiple-input single-output channel matrix) $F_k$ hergeleitet werden, die durch Transformieren einer MIMO-Kanalmatrix $H_k$ mittels Singulärwertzerlegung gewonnen wird.

2. Verfahren nach Anspruch 1, wobei $F_k$ ausgedrückt wird durch $F_k = U_k^H H_k$,
und dabei $U_k^H$ eine Matrix zum Transformieren des MIMO-Kanals $H_k$ für einen Einzelnutzer zu dem Mehrfachnutzer-MISO-Kanal $F_k$ bezeichnet.

3. Verfahren nach Anspruch 1, wobei Herleiten der in Singulärwertzerlegung zerlegten Kanalinformationen umfasst:

Durchführen von Singulärwertzerlegung der Kanalmatrix $H_k$ für mehrere Empfangsantennen durch die Empfangsvorrichtung;
Zerlegen der Kanalmatrix $H_k$ in die effektive Kanalmatrix $F_k$ für eine einzelne Empfangsantenne durch die Empfangsvorrichtung unter Verwendung einer Matrix zum Transformieren der Kanalmatrix $H_k$ zu der effektiven Kanalmatrix $F_k$; und
Zurückführen der effektiven Kanalmatrix $F_k$ zu der Sendevorrichtung durch die Empfangsvorrichtung.

4. Verfahren nach Anspruch 3, das des Weiteren Empfangen der effektiven Kanalmatrix $F_k$ und Durchführen von QR-Zerlegung der empfangenen effektiven Kanalmatrix $F_k$ durch die Sendevorrichtung umfasst.

5. Verfahren zum Senden und Empfangen von Daten in einer Empfangsvorrichtung mit einer Vielzahl von Empfangsantennen zum Kommunizieren mit einer Sendevorrichtung mit einer Vielzahl von Sendeantennen in einem MIMO-Kommunikationssystem (multiple-input multiple-output communication system), wobei das Verfahren umfasst:

Transformieren einer MIMO-Kanalmatrix $H_k$ zu einer effektiven MISO-Kanalmatrix (multiple-input multiple-output channel matrix) $F_k$ mittels Durchführen einer Singulärwertzerlegung der Kanalmatrix $H_k$, und
Zurückführen von Informationen der effektiven Kanalmatrix $F_k$ zu der Sendevorrichtung.

6. Verfahren nach Anspruch 5, wobei Durchführen der Singulärwertzerlegung der Kanalmatrix $H_k$ umfasst:

Durchführen einer Singulärwertzerlegung der Kanalmatrix $H_k$ für mehrere Empfangsantennen; und
Zerlegen der Kanalmatrix $H_k$ in die effektive Kanalmatrix $F_k$ für eine einzelne Antenne unter Verwendung einer Matrix zum Transformieren der Kanalmatrix $H_k$ zu der effektiven Kanalmatrix $F_k$.

7. Sendevorrichtung mit einer Vielzahl von Sendeantennen und einer Empfangsvorrichtung mit einer Vielzahl von Empfangsantennen für ein MIMO-Kommunikationssystem (multiple-input multiple-output communication system), wobei die Sendevorrichtung so eingerichtet ist, dass sie:

von der Empfangsvorrichtung in Singulärwertzerlegung zerlegte Kanalinformationen für einen von der Sendevorrichtung zu der Empfangsvorrichtung eingerichteten Kanal empfängt;
QR-Zerlegung der in Singulärwertzerlegung zerlegten Kanalinformationen durchführt; mehrere dem Kanal zuzuweisende Sendeantennen entsprechend einem Ergebnis der QR-Zerlegung festlegt, um so Strahlformen durchzuführen; und
Daten unter Verwendung der festgelegten mehreren Sendeantennen sendet,

wobei die Empfangsvorrichtung so eingerichtet ist, dass sie die in Singulärwertzerlegung zerlegten Kanalinformationen aus einer effektiven MISO-Kanalmatrix (multiple-input single-output channel matrix) $F_k$ herleitet, die durch Transformieren der MIMO-Kanalmatrix $H_k$ mittels Singulärwertzerlegung gewonnen wird.

8. Vorrichtungen nach Anspruch 7, die zum Durchführen des Verfahrens nach einem der Ansprüche 1 bis 4 eingerichtet sind.

9. Empfangsvorrichtung mit einer Vielzahl von Empfangsantennen zum Kommunizieren mit einer Sendevorrichtung mit einer Vielzahl von Sendeantennen für ein MIMO-Kommunikationssystem (multiple-input multiple-output communication system), wobei die Empfangsvorrichtung so eingerichtet ist, dass sie:

eine MIMO-Kanaimatrix $H_k$ zu einer effektiven MISO-Kanalmatrix (multiple-input single-output channel matrix) $F_k$ transformiert, indem sie eine Singulärwertzerlegung der Kanalmatrix $H_k$ durchführt, und Informationen der effektiven Kanalmatrix $F_k$ zu der Sendevorrichtung zurückführt.

10. Empfangsvorrichtung nach Anspruch 9, wobei die Empfangsvorrichtung so eingerichtet ist, dass sie:

die Singulärwertzerlegung der Kanalmatrix $H_k$ für mehrere Empfangsantennen durchführt; und die Kanalmatrix $H_k$ für eine einzelne Antenne unter Verwendung einer Matrix zum Transformieren der Kanalmatrix $H_k$ zu der effektiven Kanalmatrix $F_k$ in die effektive Kanalmatrix $F_k$ zerlegt.

## Revendications

1. Procédé de transmission et de réception dans un appareil de transmission et un appareil de réception, l'appareil de transmission ayant une pluralité d'antennes de transmission pour communiquer avec l'appareil de réception ayant une pluralité d'antennes de réception, dans un système de communication entrées multiples - sorties multiples, soit MIMO ou Multiple-Input Multiple-Output, le procédé comprenant :

la réception des informations de canal décomposées par décomposition en valeurs singulières, soit SVD ou Single Value Decomposition, de l'appareil de réception pour un canal établi depuis l'appareil de transmission jusqu'à l'appareil de réception ;
la réalisation d'une décomposition QR sur les informations de canal décomposées par SVD reçues ;
l'établissement de multiples antennes de transmission à allouer au canal conformément à un résultat de la décomposition QR, réalisant ainsi une formation de faisceau ; et
la transmission de données en utilisant les multiples antennes de transmission établies ;

dans lequel, dans l'appareil de réception, les informations de canal décomposées par SVD sont dérivées d'une matrice de canal effective $F_k$ à entrées multiples - sortie unique qui est obtenue en transformant une matrice de canal $H_k$ à entrées multiples - sorties multiples par décomposition en valeurs singulières.

2. Procédé selon la revendication 1, dans lequel la matrice $F_k$ est exprimée par $F_k = U_k^H H_k$, où $U_k^H$ désigne une matrice de transformation du canal MIMO $H_k$ pour un utilisateur unique en canal MISO multi-utilisateur $F_k$.

3. Procédé selon la revendication 1, dans lequel la dérivation des informations de canal décomposées par SVD comprend :

la réalisation, par l'appareil de réception, d'une décomposition SVD sur la matrice de canal $H_k$ pour de multiples antennes de réception ;
la décomposition, par l'appareil de réception, de la matrice de canal $H_k$ en matrice de canal effective $F_k$ pour une antenne de réception unique en utilisant une matrice pour transformer la matrice de canal $H_k$ en matrice de canal effective $F_k$ ; et
le renvoi, par l'appareil de réception, de la matrice de canal effective $F_k$ à l'appareil de transmission.

4. Procédé selon la revendication 3, comprenant en outre la réception, par l'appareil de transmission, de la matrice de canal effective $F_k$, et la réalisation d'une décomposition QR sur la matrice de canal effective $F_k$ reçue.

5. Procédé de transmission et de réception de données dans un appareil de réception ayant une pluralité d'antennes de réception pour communiquer avec un appareil de transmission ayant une pluralité d'antennes de transmission dans un système de communication entrées multiples - sorties multiples, soit MIMO, le procédé comprenant :

la transformation d'une matrice de canal $H_k$ à entrées multiples - sorties multiples en une matrice de canal effective $F_k$ à entrées multiples - sortie unique en réalisant une décomposition en valeurs singulières, soit SVD, sur la matrice de canal $H_k$, et

le renvoi d'informations de la matrice de canal effective $F_k$ à l'appareil de transmission.

**6.** Procédé selon la revendication 5, dans lequel la réalisation de ladite décomposition SVD sur la matrice de canal $H_k$ comprend :

la réalisation d'une décomposition SVD sur la matrice de canal $H_k$ pour de multiples antennes de réception ; et la décomposition de la matrice de canal $H_k$ en matrice de canal effective $F_k$ pour une antenne unique en utilisant une matrice pour transformer la matrice de canal $H_k$ en matrice de canal effective $F_k$.

**7.** Appareil de transmission ayant une pluralité d'antennes de transmission et appareil de réception ayant une pluralité d'antennes de réception pour un système de communication à entrées multiples - sorties multiples, soit MIMO, ledit appareil de transmission étant adapté pour :

la réception des informations de canal décomposées par décomposition en valeurs singulières, soit SVD, de l'appareil de réception, pour un canal établi depuis l'appareil de transmission jusqu'à l'appareil de réception ; la réalisation d'une décomposition QR sur les informations de canal décomposées par SVD reçues ; l'établissement de multiples antennes de transmission à allouer au canal conformément à un résultat de la décomposition QR, réalisant ainsi une formation de faisceau ; et la transmission de données en utilisant les multiples antennes de transmission établies, ledit appareil de réception étant adapté pour dériver les informations de canal décomposées par SVD d'une matrice de canal effective $F_k$ à entrées multiples - sortie unique, qui est obtenue en transformant une matrice de canal entrées multiples - sorties multiples $H_k$ par décomposition en valeurs singulières.

**8.** Appareils selon la revendication 7, adaptés pour mettre en oeuvre le procédé selon l'une des revendications 1 à 4.

**9.** Appareil de réception ayant une pluralité d'antennes de réception pour communiquer avec un appareil de transmission ayant une pluralité d'antennes de transmission pour un système de communication entrées multiples - sorties multiples, soit MIMO, ledit appareil de réception étant adapté pour :

la transformation d'une matrice de canal Hk à entrées multiples - sorties multiples en une matrice de canal effective $F_k$ à entrées multiples - sortie unique en réalisant une décomposition en valeurs singulières, soit SVD, sur la matrice de canal $H_k$, et le renvoi des informations de la matrice de canal effective $F_k$ à l'appareil de transmission.

**10.** Appareil de réception selon la revendication 9, dans lequel l'appareil de réception est adapté pour :

la réalisation de ladite décomposition SVD sur la matrice de canal $H_k$ pour de multiples antennes de réception ; et la décomposition de la matrice de canal $H_k$ en matrice de canal effective $F_k$ pour une antenne unique en utilisant une matrice pour transformer la matrice de canal $H_k$ en matrice de canal effective $F_k$.

FIG.1

FIG.2

FIG.3

FIG.4

**REFERENCES CITED IN THE DESCRIPTION**

**Patent documents cited in the description**

- US 2003060173 A1
- US 2004209579 A1